Europäisches Patentamt

European Patent Office

Office européen des brevets

(11) Publication number: **0 212 877**
**A2**

# (12) EUROPEAN PATENT APPLICATION

(21) Application number: **86305838.4**

(22) Date of filing: **29.07.86**

(51) Int. Cl.⁴: **G 02 B 6/26**

(30) Priority: **20.08.85 GB 8520849**

(43) Date of publication of application: **04.03.87**
**Bulletin 87/10**

(84) Designated Contracting States: **AT BE CH DE FR GB IT LI LU NL SE**

(71) Applicant: **PIRELLI GENERAL plc, 40 Chancery Lane, London WC2A 1JH (GB)**

(72) Inventor: **Osterfield, John Richard, 51 Peverells Wood Avenue, Chandlers Ford Eastleigh Hampshire (GB)**
Inventor: **Scrivener, Paul Laurence, 8 Cunard Avenue, Shirley Southampton Hampshire (GB)**

(74) Representative: **Abbie, Andrew Kenneth et al, A.A. THORNTON & CO. Northumberland House 303/306 High Holborn, London, WC1V 7LE (GB)**

(54) Optical coupler for an optical fibre.

㊼ An optical coupler 1 for use with an optical fibre 6 provided with a transparent buffer layer has a body member 2 of a hard transparent plastics material which is provided with a substantially U-shaped concavely curved surface 4 and a plunger member 9 reciprocatable relative to the body member for pressing an optical fibre located in a groove 5 extending along the surface against the body member such that the fibre is subjected to microbending. The microbending of the fibre markedly assists the amount of light which is transferres to or from the core of the bent portion of the fibre which is located in the groove when the optical coupler is used for introducing light into the core or withdrawing light from the core respectively.

0212877

## OPTICAL COUPLER FOR AN OPTICAL FIBRE

This invention relates to an optical coupler for use with an optical fibre provided with a transparent buffer layer.

As disclosed in Japanese Patent Specification No. 54151455 light can be introduced into or withdrawn from an optical fibre through a transparent buffer layer thereof at a bent portion of the fibre intermediate the ends thereof. In this Japanese specification such introduction and withdrawal of light is used to axially align the fibre cores at the ends of first and second optical fibres which are to be spliced together. Light from a light emitting device is introduced into the first optical fibre through the transparent buffer layer thereof at a bent intermediate portion of the first optical fibre to provide an alignment signal which is directed into the second optical fibre and withdrawn through the transparent buffer layer of the second optical fibre at a bent intermediate portion thereof. The withdrawn light is detected by a photodetector and the relative position of the ends of the fibres is adjusted until the quantity of detected light is at a maximum. It is at this relative position of the fibre ends that the cores of the fibres will be aligned for maximum optical transmission. In the Japanese specification there is no specific disclosure of the use of an optical coupler between the light emitting device and the first optical fibre or between the second optical fibre and the detector. However we have found that if a light emitting diode is used as the light emitting device in the method, insufficient light is introduced into the first optical fibre for a useful signal to be withdrawn from the second optical fibre unless optical couplers are used, and an object of this invention is to provide an optical coupler for use in assisting introduction of light into, or withdrawal of light from, an optical fibre through a transparent buffer layer thereof at a bent portion of the optical fibre intermediate its ends.

- 2 - 0212877

To this end the invention includes an optical coupler for use with an optical fibre provided with a transparent buffer layer, said coupler comprising a body member of a hard transparent plastics material which is provided with a substantially U-shaped concavely curved surface, and means for pressing an optical fibre provided with a transparent buffer layer and extending along said curved surface against the body member such that the fibre follows a substantially U-shaped path between said body member and said pressing means and is subjected to microbending.

In order to accurately locate the optical fibre along the curved surface of the body member that surface and/or the pressing means may be provided with a groove.

In the case where the curved surface of the body member is not provided with a groove, the pressing means preferably comprises a plunger member which is reciprocatable relative to the body member for movement into and out of a recess therein which provides said curved surface, said plunger member having a substantially U-shaped convexly curved end surface which substantially matches said concavely curved surface over at least an intermediate portion of its extent and which is provided with a groove extending therealong for locating the optical fibre along the concavely curved surface of the body member when the optical fibre is being pressed by said plunger member against the body member.

In the case where the curved surface of the body member is provided with a groove extending therealong for locating the optical fibre along said curved surface, the pressing means preferably comprises a plunger member which is reciprocatable relative to the body member for movement into and out of a recess therein which provides said curved surface, said plunger member having a substantially U-shaped convexly curved end surface which substantially matches said concavely curved surface over at least an intermediate portion of its extent and which is provided with a groove extending therealong in alignment with said groove in the concavely curved surface such that the optical fibre is located in both said grooves when being pressed by said plunger member against the body member.

The base portions of the substantially U-shaped surfaces may be part cylindrical having a radius of from about 5 to 15 mm, and the plunger member may be biased into said recess by biasing means.

When the optical coupler is used for introducing light into an optical fibre, preferably a light emitting diode is located in a recess in said body member beneath said concavely curved surface for directing light there-towards.

When the optical coupler is used for withdrawing light from an optical fibre and it is desired to measure the withdrawn light, preferably a light detector is located in a recess in said body member beneath said concavely curved surface for detecting any light withdrawn from an optical fibre located in the groove therein.

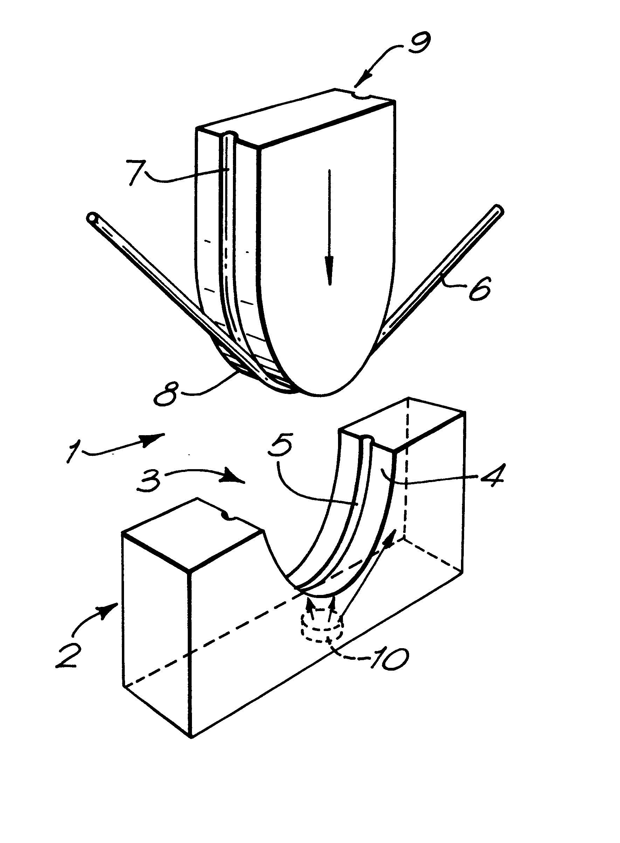

In order that the invention may be well understood, the presently preferred embodiment thereof, which is given by way of example only, will now be described with reference to the accompanying drawing in which the single figure is a schematic perspective view of an optical coupler provided with a light emitting diode being fitted to an optical fibre provided with a transparent buffer layer.

The optical coupler 1 illustrated comprises a body member 2 of a hard, transparent plastics material such as PMMA or Polystyrene formed as a block conveniently of rectangular parallelepiped configuration as illustrated and having therein a recess 3 which provides a concavely curved surface 4. The surface 4 has a groove 5 extending therealong for locating in a bent condition, an optical fibre 6 provided with a transparent buffer layer which is illustrated located in a corresponding groove 7 extending along a convexly curved end surface 8 of a plunger member 9 of the optical coupler. The plunger member 9 which acts as a pressing means for pressing an optical fibre located in the groove 5 of the body member against the body member may be formed of brass or some other relatively hard, opaque material. The plunger member is mounted to the body member by means not shown for reciprocatable movement into and out of the recess 3 and is biased into the recess by biasing means (not shown). The grooves 5 and 7 are aligned such that an optical fibre 6 which has been located in the groove 7 of the plunger member 9, as illustrated, is moved into and located by the groove 5 in the body member when the plunger member is moved into the recess 3.

A light emitting diode 10 is located in a recess in the body member beneath the surface 4 thereof for directing light towards an optical fibre located in the groove 5, and its orientation is adjusted to maximise the amount of light therefrom which enters the fibre's core.

The biasing of the plunger member 9 causes the latter to press the optical fibre which is located in, and follows the curved course of, grooves 5 and 7 against the body member such that microbending of the fibre due to surface irregularities in the surface of the groove 5 is caused. We have determined that by subjecting the fibre to microbending in this way the amount of light which can be transferred from the light emitting diode into the core of the fibre is markedly increased. The amount of pressure exerted on the fibre by the optical coupler is not critical except that it should be sufficient to cause microbending of the fibre and not so great as to cause damage to the fibre. This allows a relatively wide range of pressures to be used in practice. The pressure is conveniently exerted automatically by the plunger member's biasing means.

In the illustrated optical coupler the curved surfaces 4 and 8 are substantially U-shaped such that an optical fibre located in the grooves 5 and 7 thereof follows a substantially U-shaped bent course.  The curved end surface 8 of the plunger member 9 matches the curved surface 4 of the body member 2 over at least an intermediate portion of its extent and as illustrated the substantially U-shaped surfaces 4 and 8 have matching base portions.  The two sides of surface 4 diverge outwardly from the base portion thereof and the two sides of the surface 8 extend substantially parallel to each other from the base portion thereof.  In practice, it has been found that providing the U-shaped surfaces with part cylindrical base portions having a radius of from about 5 to 15 mm produces good performance from the illustrated optical coupler.

It is to be understood that subjecting a bent portion of an optical fibre provided with a transparent buffer member to microbending in the manner described above not only increases the amount of light that may be transferred into the core of the fibre but will also markedly increase the amount of light which may be withdrawn from the core of the fibre.

Thus, in a modified embodiment, the light emitting diode of the illustrated optical coupler is replaced with a light detector, for example a photodiode, for detecting light withdrawn from an optical fibre located in the groove 5 of the optical coupler.

As will be appreciated, both the illustrated embodiment and the modified embodiment discussed above would be suitable for use in a method of axially aligning the cores of two optical fibres as disclosed in the Japanese specification referred to above.

It will also be understood that the groove 5 may be omitted from the surface 4 of the body member 2 in the embodiment and the groove 7 of the plunger member 9 solely relied upon for locating the optical fibre along the surface 4.

Furthermore, for the avoidance of doubt it is to be understood that the term 'transparent' as used in the expression 'transparent buffer layer' herein merely means that the buffer layer is able to transmit the light which is being introduced into or extracted from the optical fibre with the aid of the optical coupler.

- 7 -                    0212877

CLAIMS:

1.  An optical coupler for use with an optical fibre provided with a transparent buffer layer, said coupler comprising a body member of a hard transparent plastics material which is provided with a substantially U-shaped concavely curved surface, and means for pressing an optical
fibre provided with a transparent buffer layer and extending
along said curved surface against the body member such that
the fibre follows a substantially U-shaped path between
said body member and said pressing means and is subjected
to microbending.

2.  An optical coupler as claimed in claim 1, wherein said
pressing means comprises a plunger member which is reciprocatable relative to the body member for movement into and
out of a recess therein which provides said curved surface,
said plunger member having a substantially U-shaped convexly curved end surface which substantially matches said
concavely curved surface over at least an intermediate
portion of its extent and which is provided with a groove
extending therealong for locating the optical fibre along
the concavely curved surface of the body member when the
optical fibre is being pressed by said plunger member
against the body member.

3.  An optical coupler as claimed in claim 1, wherein
said curved surface is provided with a groove extending
therealong for locating the optical fibre along said curved
surface.

4.  An optical coupler as claimed in claim 3, wherein
said pressing means comprises a plunger member which is
reciprocatable relative to the body member for movement
into and out of a recess therein which provides said curved
surface, said plunger member having a substantially U-
shaped convexly curved end surface which substantially

- 8 -

0212877

matches said concavely curved surface over at least an intermediate portion of its extent and which is provided with a groove extending therealong in alignment with said groove in the concavely curved surface such that the optical fibre is located in both said grooves when being pressed by said plunger member against the body member.

5. An optical coupler as claimed in claim 2 or 4, wherein the base portions of the substantially U-shaped surfaces are part cylindrical having a radius of from about 5 to 15 mm.

6. An optical coupler as claimed in claim 2, 4 or 5, wherein said plunger member is biased into said recess by biasing means.

7. An optical coupler as claimed in any one of claims 2 to 6, wherein said plunger member is formed of a hard, opaque material.

8. An optical coupler as claimed in any one of the preceding claims, wherein a light emitting diode is located in a recess in said body member beneath said concavely curved surface for directing light theretowards.

9. An optical coupler as claimed in any one of claims 1 to 7, wherein a light detector is located in a recess in said body member beneath said concavely curved surface for detecting any light withdrawn from an optical fibre located in the groove therein.